# EUROPEAN PATENT APPLICATION

(11) **EP 1 661 866 A1**
(43) Date of publication of application: **31.05.2006**
(21) Application number: 04028187.5
(22) Date of filing: 27.11.2004
(51) Int. Cl.: C03C 1/00, C03B 8/02, C03B 19/12, C03C 3/06

(54) **Method for the production of shaped silica aquagels**

(71) Applicant: Degussa AG, 40474 Düsseldorf (DE)
(72) Inventor: Boara, Giulio, 26013 Crema (IT); Costa, Lorenzo, Dr., 27048 Sommo (PV) (IT)

(57) **Abstract**

It has been discovered that aquagels, formed from acid catalized composite sols, survive to conditions of high-tension when they are prepared by a process that hydrolyzes the silicon alkoxides in presence of fumed silica, rather than adding fumed silica to hydrolyzed silicon alkoxide as in the prior art. The aquagel can be used for the production of monoliths of glass.

## Description

The invention concerns a method for the production of formed aquagels for the production of glass monoliths by means of the sol-gel process.

The sol-gel process for preparing silica glass manufacts by precision moulding using acid catalized composite sols is well reported in the patent literature. Examples of the known process, (hydrolysis completed in absence of fumed silca), are: EP 705797, US 6567210, US 5948535, EP586013, US 5,236,483, US 4,801,318. Examples of the "modified process", (hydrolysis in presence of fumed silica) R. Ganguli et al., Proceeding of SPIE Vol.4889 (2002) and in WO 01/53225 A1, WO02/074704 A1.

Process modifications to improve the mechanical properties of gels to reduce cracks and ruptures are frequent in the sol-gel literature and involve several types of sol-gel processes. Examples are US 6,209,357, EP 0974557 A1, EP 1251106 A2 and US 5,264,197. Other examples are those that teach to decrease the physical tension in the gels to avoid or to reduce cracking and ruptures: Sol-Gel Production, Edited by Helmut Schmidt. Key Engineering Materials, Vol.150, 1998, pp.33-40. As it is well known to those active in the field, academic as well industrial laboratories have committed in times considerable efforts and resources for developing precision moulding technology of silica glass manufacts. Strong motivation of the effort is a general moulding method to provide preforms with the desired geometry and dimensions and with the specified degree of precision, transparent to electromagnetic radiation and throughout the entire visible spectrum, featuring the highest chemical stability of all industrially available materials, and with thermomechanical properties comparable to those of quartz.

Silica glass, sometimes incorrectly described as quartz glass, is a well known material that displays all of the properties described above: it is among the most stable and hardest oxidic materials, with a high melting point and excellent optical properties. However, the widespread availability of quartz products in various different geometries and sizes has long been only a mirage, because of the high cost of the manufacturing process and the very limited flexibility of the working techniques applicable to materials of this type, characterised by intrinsic properties of elevated hardness, fragility, and heat resistance that automatically exclude the majority of conventional processes.

Among manufacturing techniques, moulding is held in high regard due to its characteristics of flexibility and, under certain conditions, cost-effectiveness. In general this technique is limited only by the categories of materials with which it can be used, which do not include high-melting point materials, and by the associated quality specifications, which are generally not compatible with high precision geometries.

Among optical materials, moulding techniques are used with soft glass and plastic for applications in which high precision is not a critical requirement. High precision moulding of optical materials can be performed at high pressure and high temperature on high melting point materials, but the process is only used for high value added optical components of very limited size because of the associated production costs, which are among the highest of all manufacturing techniques.

It is paradoxical to note that high precision moulding of optical materials, without dimensional limitations and at relatively low cost, through sol-gel chemistry, was developed for use with silica glass, which is a high melting point material. This process, with the developing of sol-gel technology, has been expected to contribute significantly to the industrial production of net-shape silica glass manufacts.

Good results were reported, in facts, in the sol-gel moulding ,(US 5,236,483 and US 4,801,318): tubular shapes suitable as jackets for optical fiber-preforms and planar, thick plates were demonstrated as feasible by sol-gel technology.

While good progress was achieved for certain shapes and dimensions, disappointing failures remain with those geometry's for which the moulding can not avoid to induce into the aquagel substantial level of physical stress or tension. Precision Sol-Gel Moulding is an art and a science. People will never end to learn how to improve it, because, due to its genuine interdisciplinary nature, sol-gel moulding is open to a very large body of knowledge, that is and always will be, in continuous evolution. It is known to those expert in precision sol-gel moulding that, independently of mechanical accidents eventually occurring during extraction of the aquagel from the mould, there are gel geometries that survive relatively easier to initial process steps than others, that, under this respect, have considerably more problems. For example, we know that moulding disks-shaped aquagels is easier than moulding extended cylinders even if of the same diameter. We know that to mould a convex surface it is, in general, easier than to mould a concave surface.

We know that if we mould an extended planar glass with a structured surface only on one side, it is generally much easier to do it in a thick glass than on a thin one probably, because of the asymmetric surface tension that might deform a thin plate, but not a thick one. Conversely it is much easier to mould a planar glass with symmetrical surfaces, than one with an extended structure only on one side.

Interesting process to make sol was presented in WO01/53225 A1, WO 02/074704 A1, and R. Ganguli et al., proceeding of SPIE, Vol. 4889 (2002). This process is designed to obtain silicic sols of considerably high density and are sighted to products such UV photo masks and silica raw glass free from bubbles. However these disclosures do not tech how to improve mechanical properties of gels.

Improved results were shown by decreasing the mould-induced tension in the aquagel by using ideal isotropic gels, produced though a specific formulation (Sol-Gel Production, Key Engineering Materials, Vol. 150 1998, pp.33-40). This technique showed good applicability with optical lenses, particularly of the plano convex type.

Other routs to resolve the problem have been tried by improving the mechanical properties of the aquagel: specially-tailored gel microstructure is provided by adjusting the relative concentrations of an alcohol diluent and/or one or more catalysts in the sol, (US 5,264,197). This technique was designed and showed good applicability with xerogel (raw material, composed of silicon alkoxide without any fumed silica and evaporated at atmospheric pressure: conditions considerably different from those considered on the present invention) or by silica precipitation at contact sites of adiacent silica particles via induced gelation,(US 6,209,357). This technique is designed again for conditions not compatible with those of the present invention: xerogel, prepared from alkaline sol (pH 10.5 or higher) without any TEOS, and evaporated at atmospheric pressure. They showed good applicability with raw material limited to tubular shape.

All the known processes reported, however, do not resolve the problem, that is essentially a general problem. With shape unlimited precision-moulding, This is the problem: when the mould-induced tension increases above the level previously tested and verified as acceptable, the aquagel breaks.

Mould design and mould materials may improve in times and reduce the induced-tension on aquagels, nevertheless the mechanical strength of the aquagel will be one of the basic factors limiting the future field of sol-gel moulding applications.

Experience tech that such an aquagel will be deeply tensioned when extracted from the mould.

The subject of the invention is a method for the production of formed aquagels for the production of glass monoliths by means of the sol-gel process comprising the following steps:
a. Dispersing a pyrogenically prepared silicon dioxide in water or a water containing solvent, to form an aqueous or water containing dispersion.
b. Adding of an acid in order to reach a pH-value of 2±0,5.
c. Adding of tetraethylorthosilicate (TEOS).
d. Hydrolyzing the tetraethylorthosilicate (TEOS) in order to produce a sol containing the pyrogenically produced silicon dioxide.
e. Evaporating the liquid from the sol.
f. Adding to the remaining sol an aqueous solution of ammoniumhydroxide in order to reach a pH-value of 4±0,5.
g. Filling the sol into a mould. h. Gelling the sol to the corresponding aquagels.

Improved mechanical properties of highly tensioned aquagels, prepared from acid catalized, composite, silicic sols are the objective of the current invention. As an example of highly tensioned aquagel we describe a tubular, gelled material, > 45 cm. long, > 10 cm in diameter, closed at one end by a semispherical dome. This object is likely to compound in one process-step many of the classical difficulties encountered in sol-gel moulding. For sake of clarity they might be identified as it follow:
---use of inner mould that always implies extraction of the inner part of the mould before syneresys of the aquagel,
---shape of the inner mould that tend to produce "inner-vacuum" in the aquagel during extraction.
---depth of the inner mould that implies use of rigid material, excluding other convenient mechanical solutions based on flexible imprints.

A further subject of the invention is a method for the production of monoliths by means of the sol-gel process using the aquagel produced according to the invention, comprising:
a. Exchanging the solvent by acetone.
b. Extracting the aquagel under supercritical or slightly subcritical conditions in order to get an aerogel.
c. Treating the aerogel thermally for the densification to glass.

The thermal treatment can consist of a calcination step, to oxidise and properly remove the reaction products of all organic traces left by previous process-steps, a purification step to remove by clorination at high temperature all metal traces present at ppm levels in the precursors and finally a densification step to close the pores of the aerogel and to reach the theoretical density of silica glass.

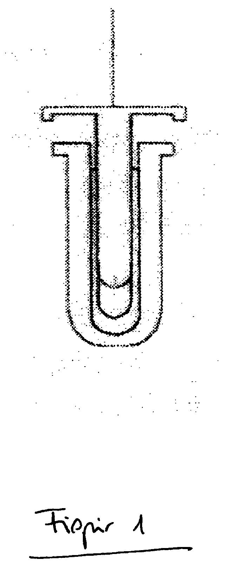

In the contest of preparing composite, acid catalized, silicic sols the inventors of the present, were surprised by the observation, that two different methods of hydrolyzing the silicon alkoxide, considered to produce at the end equivalent results in term of sols, were actually producing a spectacular difference in term of aquagels. Boundary conditions of the experiment were: n-moles of tetraethylorthosilicate (TEOS) were hydrolyzed m-moles of bidistilled water at pH 2, containing HCl. Proper stirring of the liquid emulsion was activated during the hydrolysis. At hydrolysis completed, a known volume (V) of liquid was evaporated under condition of reduced pressure. X-moles of fumed silica were added. Nine identical moulds, illustrated in figure 1, known to produce a high level of mould-induced tension in the aquagel, were filled. The sol gelled in about 2 hours; after 12 more hours, with syneresys fully developed, 8 aquagels were cracked (at least one crack from top to bottom).

The same experiment was repeated, but this time the x-moles of fumed silica were added to the TEOS reactor before starting hydrolysis. All the experimental conditions were maintained identical, but for the presence of the x-moles of fumed silica in the hydrolysis-reactor during hydrolysis of TEOS. Six identical moulds were filled, (identical to the nine of the previous experiment). After identical time, with syneresys fully developed, 1 aquagel was cracked (one crack from top to bottom).

The statistical difference between the results of the two experiments is: 88% cracked samples in experiment 1, versus 16% cracked samples in experiment 2.

The two experiments were repeated; the statistical difference between the two sets of results repeated itself almost identical: 88% broken samples in experiment 1, versus 14% in experiment 2.

Clearly a substantial improvement of aquagels of type 2 in mechanical behaving under conditions of high tension.

### EXAMPLES

### Example N° 1 STANDARD N.TECH: PROCESS "4S"

9.00 Kg. of tetraethylorthosilicate (TEOS) was set in a chemical reactor equipped with adequate mechanical agitator. 27.00 Kg. of 0.1N HCl (dilution prepared from deionized, bidistilled water) was added with good mechanical stirring to the TEOS in the reactor. After about 1 h, at hydrolysis completed, the liquid was transferred into a high-capacity rotovapor and concentrated at reduced pressure. 13.0 litre's of liquid were extracted from the sol. The concentrated sol was transferred to an appropriate homogenizer ("Ultra-Turax provided with high sheer head). 5.193 Kg. of fumed silica DEGUSSA OX-50 were added gradually and emulsionized to the TEOS. After 40 minutes the composite sol was transferred to the reconditioning reactor, degassed for 1 hr at reduced pressure and conditioned at pH 4 by drop-wise addition of diluted ammonium hydroxide 0.1N.

The sol at pH 4 was used immediately to fill 9 moulds as described in figure 1. After 1:30 hr the sol was fully gelled. After 1:30 hr from gelation the inner-mould was extracted from the aquagel. 24 hrs from gelation, with syneresis fully developed, the aquagels were carefully inspected. 8 aquagels were severely cracked. Only one intact aquagel remained.

### Example N 2 "INVERTED PROCESS" WITH IDENTICAL SOL FORMULATION

14,425 Kg of 30% aqueous dispersion of fumed silica Aerosil OX 50 (VP DISPERSION W 1230 DEGUSSA) was set in a chemical reactor provided with adequate mechanical agitation and diluted to lower silica content by addiction of 14,883 kg of water (bidistilled, deionized). Acidity of the dispersion was controlled to pH 2 by dropwise addition of HCl 1N with proper agitation. 9,00 Kg of tetraethylorthosilicate (TEOS), was added with proper agitation to the reactor to hydrolyze and form with fumed silica composite sol. After about 1hr the sol was introduced into a high capacity rotavapor for evaporation under reduce pressure. A volume equal to 13,0 litres of evaporated liquid was collected. At this point the sol left in the rotavapor has identical formulation of the sol of example 1 after emulsionation. The concentrated sol was conditioned for gelation at pH 4 by dropwise addition with stirring of diluted ammonium hydroxide (0.1N). The sol was used to fill 7 large moulds corresponding to the design of fig.1; in about 1:30 hr the sol was fully gelled. In about 1:30 from gelation, the inner-mould was extracted from the aquagels.

24hrs after gelation, with syneresis fully developed, the aquagels in the moulds were carefully inspected. 6 aquagels were perfect to visual inspection, 1 was cracked.

### Example N 3 PROCESSING OF AQUAGELS TO SILICA GLASS MANUFACTS

The aquagels free from cracks, prepared in example 2, were subjected to solvent exchange to replace the original mother-liquid with anhydrous acetone. The exchange was continued until the water concentration in the liquid, external to the aquagel, was ≤ 0.5%. The aquagels were then subjected to liquid-phase extraction in autoclave under conditions supercritical, all the aquagels remained intact originating equal number of aerogels. 5 aerogels were subjected to thermal treatment for densification to glass, the treatment is applied in the company costume-developed vertical oven and consist of one calcination step, to oxidise and properly remove the reaction products of all organic traces left by previous process-steps; one purification step to remove by coloration at high temperature all metal traces present at ppm levels in the precursors and finally a densification step to close the pores of the aerogel and reach the theoretical density of silica glass.

All 5 aerogels generated 5 excellent manufacts in silica glass within the specifications requested

## Claims

1. Method for the production of formed aquagels for the production of monoliths by means of the sol-gel process, comprising the following steps:
a. Dispersing a pyrogenically prepared silicondioxide in water or a water containing solvent, to form an aqueous or water containing dispersion.
b. Adding of an acid in order to reach a pH-value of 2±0,5.
c. Adding of tetraethylorthosilicate (TEOS).
d. Hydrolyzing the tetraethylorthosilicate (TEOS) in order to produce a sol containing the pyrogenically produced oxide of a metal and/or metalloid.
e. Evaporating the liquid from the sol.
f. Adding to the remaining sol an aqueous solution of ammoniumhydroxide in order to reach a pH-value of 4±0,5.
g. Filling the sol into a mould.
h. Gelling the sol to the corresponding aquagels.

2. Method for the production of glass-monoliths by means of the sol-gel process using the aquagel produced according to claim 1, comprising:
a. Exchanging the solvent by acetone.
b. Extracting the aquagel under supercritical or slightly subcritical conditions in order to get an aerogel.
c. Treating the aerogel thermally for the densification to glass.
